# EUROPÄISCHE PATENTSCHRIFT

(11) **EP 3 180 183 B1**
(45) Veröffentlichungstag und Bekanntmachung des Hinweises auf die Patenterteilung: **17.10.2018**
(21) Anmeldenummer: 15744118.9
(22) Anmeldetag: 30.06.2015
(51) Int. Cl.: B29C 70/52, B29C 33/34, B29D 99/00, B29C 70/34, B29C 70/46

(54) **VERFAHREN UND VORRICHTUNG ZUR HERSTELLUNG EINES KUNSTSTOFFPROFILS**
METHOD AND DEVICE FOR THE PRODUCTION OF A PLASTIC PROFILE
PROCÉDÉ ET DISPOSITIF DE FABRICATION D'UN PROFILÉ EN MATIÈRE PLASTIQUE

(30) Priorität: 14.08.2014 DE 102014011943
(43) Veröffentlichungstag der Anmeldung: 21.06.2017
(73) Patentinhaber: Thomas GmbH + Co. Technik + Innovation KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2015/001317
(87) Internationale Veröffentlichungsnummer: WO 2016/023605

(56) Entgegenhaltungen:
- EP-A1- 2 764 982
- DE-A1-102012 018 429
- US-A- 4 445 957

## Beschreibung

Die Erfindung betrifft ein Verfahren zur Herstellung eines Kunststoffprofils gemäß dem Oberbegriff des Anspruchs 1 sowie eine Vorrichtung zur Herstellung eines Kunststoffprofils gemäß dem Oberbegriff des Anspruchs 9.

Gerade Kunststoffprofile aus Kunststoff und einer durchgehenden Verstärkung aus Fasern, Geweben und/oder Gewirken die in den Kunststoff eingebettet sind, werden überwiegend durchgehend in einem Strang hergestellt. Dieses geschieht üblicherweise im Pultrusionsverfahren. Dazu wird der mindestens eine Strang durch eine Form hindurch geführt. In der Form wird der Strang mit flüssigem Kunststoff versehen, der anschließend in der Form aushärtet. Das die Form verlassende ausgehärtete Kunststoffprofil wird durch eine in Herstellungsrichtung vor der Form angeordneten Abzieheinrichtung durch die Form gezogen und dabei gleichzeitig abtransportiert. Dadurch, dass das Kunststoffprofil von der Abzieheinrichtung durch die Form gezogen wird, lassen sich bei den bekannten Verfahren der beschriebenen Art, insbesondere bei bekannten Pultrusionsverfahren, nur gerade Kunststoffprofile bilden.

Bei der Herstellung von Kunststoffprofilen mit Halbzeugen bzw. komplexen Faseraufbauten treten besondere Probleme auf, wenn diese beim Eintritt in die Form stark komprimiert werden. Es kann beim Eintritt in die Form zu einem Stau der Faseraufbauten bzw. textilen Halbzeugen und damit zu einer Verfestigung des Materials kommen, so dass der Prozess stoppt bzw. gestoppt werden muss. Dieses Risiko besteht insbesondere, wenn die Fasern in einem spitzen Winkel in den Formeintritt einlaufen und die für die Herstellung des Halbzeugs verwendeten Materialien in der Regel flach gedrückt werden müssen, um einen sinnvollen Fasergehalt im Kunststoffprofil zu erreichen. Um dieser Stausituation abzuhelfen, kann dass Halbzeug gespannt werden, so dass ein Aufstauen im Eintritt praktisch nicht möglich ist. Diese Maßnahme allein, ohne dass das Material bereits in der Gestalt des Kunststoffprofils liegt, kann aber zu erheblichen Verzerrungen des Materials und mechanischen Spannungen in dem Material führen.

Das Dokument EP2764982A1 offenbart ein Verfahren und eine Vorrichtung zur Herstellung eines eine durchgehende Verstärkung aufweisenden Kunststoffprofils gemäß den Oberbegriffen der Ansprüche 1 und 9. Der Erfindung liegt die Aufgabe zugrunde, ein Verfahren und eine Vorrichtung zur einfachen Herstellung individuell geformter Kunststoffprofile zu schaffen.
Ein Verfahren zur Lösung dieser Aufgabe weist die Maßnahmen des Anspruchs 1 auf. Demnach ist es vorgesehen, dass die Form aus mindestens zwei, bezogen auf den Querschnitt des Kunststoffprofils, getrennte Formteile gebildet wird, die zeitlich versetzt entgegen einer Herstellungsrichtung des Kunststoffprofils entlang eines Abschnitts desselben Kunststoffprofils bewegt werden. Da die Form bzw. die Formteile ohnehin an den zwei- oder dreidimensionalen Verlauf des Kunststoffprofils angepasst ist, kann sie dem individuellen Verlauf des Kunststoffprofils folgen. Durch das zeitlich versetzte Weiterbewegen der Formteile entgegen der Herstellungsrichtung relativ zum Kunststoffprofil tritt ein Abschnitt des fertiggestellten und ausgehärteten Kunststoffprofils zumindest teilweise aus einem der Formteile heraus, ohne dass das Kunststoffprofil durch die Form gezogen werden muss und dadurch mit einer Zugspannung belastet wird, die es nicht zulassen würde, gekrümmte Profile, wie beim Stand der Technik, zu bilden. Durch das versetzte Bewegen der Formteile wird die Staubildung der Verstärkung dadurch unterbunden, dass die Verdichtung des Materials abwechselnd vor dem sich bewegenden Formteil hergeschoben wird.
Es ist weiterhin vorgesehen, dass die mindestens zwei Formteile periodisch im Wechsel, insbesondere zumindest zeitweise gleichzeitig bzw. getrennt entgegen der Herstellungsrichtung des Kunststoffprofils entlang eines Abschnitts desselben Kunststoffprofils bewegt werden. Demnach bewegt sich zunächst ein erstes Formteil entgegen der Herstellungsrichtung und danach ein weiteres bzw. ein zweites Formteil entlang des Kunststoffprofils. Es ist jedoch auch vorgesehen, dass sich das zweite Formteil bereits auf dem Kunststoffprofil bewegt, während sich das erste Formteil auch noch in Bewegung befindet. Somit können sich zwei Formteile, ähnlich wie die Skier eines Skilangläufers über das Formteil bewegen.

Die Periodizität der Bewegung der Formteile wird im Wesentlichen festgelegt von der Art und der Form der Formteile und dem Material bzw. dem herzustellenden Kunststoffprofil. Durch eine Erhöhung der Taktung kann die Geschwindigkeit der Herstellung des Kunststoffprofils beschleunigt werden.

Bei einer bevorzugten Ausgestaltung des Verfahrens ist es vorgesehen, dass die mindestens zwei Formteile kontinuierlich bzw. schrittweise, vorzugsweise parallel zueinander, wenigstens teilweise gegenüberliegend oder überragend, entlang einer Längsachse des Kunststoffprofils bewegt werden, wobei, insbesondere nur während einer Rückwärtsbewegung der Formteile entgegen der Herstellungsrichtung, eine Relativbewegung der Formteile zum Kunststoffprofil stattfindet. Es ist vorgesehen, dass sich die Formteile in einer beliebigen Art und Weise, je nach Anforderungen des zu formenden Kunststoffprofils, vorzugsweise unabhängig voneinander, entgegen der Herstellungsrichtung, entlang des Kunststoffprofils bewegen können.

Es ist vorgesehen, dass das Kunststoffprofil während der Bewegung der mindestens zwei Formteile auf dem relativ zu demselben still stehenden Kunststoffprofil festgehalten wird, vorzugsweise durch mindestens ein Haltemittel festgehalten wird. Damit sich das zu bildende Kunststoffprofil während der Bewegung der Formteile nicht bewegt, wird der Abschnitt des Kunststoffprofils, welches in Herstellungsrichtung bereits aus den Formteilen ausgetreten ist, durch ein Haltemittel, insbesondere ein Greifer, fixiert bzw. festgehalten. Durch dieses Festhalten wird eine reproduzierbare Herstellung der Kunststoffprofile möglich.

Verfahrensmäßig ist bevorzugt vorgesehen, dass zunächst ein erstes Formteil, vorzugsweise ein relativ zum Querschnitt der Form konvexes Formteil, entgegen der Herstellungsrichtung entlang des stillstehenden Kunststoffprofils bewegt wird und anschließend ein zweites, insbesondere kürzeres Formteil, vorzugsweise ein relativ zum Querschnitt der Form konkaves Formteil gleichermaßen wie das erste Formteil bewegt wird, wobei bei jeder Bewegung eines Formteils entgegen der Herstellungsrichtung zumindest ein Teil eines neu hergestellten Abschnitts des Kunststoffprofils von dem sich bewegenden Formteil entformt bzw. freigegeben wird.

Bei der Herstellung eines relativ zur Längsachse der Form bzw. des Kunststoffprofils gekrümmten Kunststoffprofils ist es vorgesehen, dass das kürzere Formteil entlang eines äußeren Radius des gekrümmten Profils bzw. innerhalb eines inneren Radius des gekrümmten Profils entlang bewegt wird. Es ist außerdem denkbar, dass zuerst das konkave Formteil bewegt wird und darauf das konvexe Formteil. Das Verfahren sieht es somit ausdrücklich auch vor, gekrümmte Kunststoffprofile herzustellen, wie beispielsweise Bögen, Federn, oder dergleichen, aber auch geschlossene Formen wie beispielsweise Ringe, vorzugsweise Felgen bzw. Fahrradfelgen. Das Verfahren ist daher nicht auf gerade Profile eingeschränkt, vielmehr lassen sich beliebig geformte Profile, insbesondere gekrümmte Profile herstellen.
Nach einer weiteren Ausgestaltung des Verfahrens ist es vorgesehen, dass das mindestens eine Haltemittel in Phasen, in denen die Formteile still stehen, außer Kontakt mit dem Kunststoffprofil gebracht wird und sich die mindestens zwei Formteile zusammen mit dem Kunststoffprofil in Herstellungsrichtung auf das mindestens eine stillstehende Haltemittel zu bewegen und das mindestens eine Haltemittel anschließend wieder zum erreichen einer Ausgangsstellung in Kontakt mit dem Kunststoffprofil gebracht wird. Daran anschließend bewegen sich die Formteile zur Bildung des Profils wieder in entgegengesetzte Herstellungsrichtung.
Bevorzugt sieht es die Erfindung weiter vor, dass das mindestens eine Haltemittel in Phasen, in denen die Formteile stillstehen, außer Kontakt mit dem Kunststoffprofil gebracht wird und relativ zum stillstehenden Kunststoffprofil in Richtung der ebenfalls stillstehenden Formteile bewegt wird, vorzugsweise entgegen der Herstellungsrichtung zurückbewegt wird, wieder in Kontakt mit dem Kunststoffprofil gebracht wird und anschließend zum Erreichen einer Ausgangsstellung, die Formteile zusammen mit dem Kunststoffprofil und dem Haltemittel in Herstellungsrichtung bewegt werden.
Insbesondere sieht es die Erfindung weiter vor, dass beim Bewegen der Formteile die Verstärkung zwischen den Formteilen und einem sich in Herstellungsrichtung hinter der Form befindenden Materialdepot vorgespannt wird, vorzugsweise über das konvexe bzw. konkave Formteil vorgespannt wird, insbesondere die Verstärkung in der Gestalt des herzustellenden Kunststoffprofils vorgespannt wird. Diese Vorspannung in Kombination mit dem wechselhaften Bewegen der Formteile führt dazu, dass die Fasern der Verstärkung gezielt und fest, aber ohne Staubildung und somit ohne Verspannung in das Kunststoffprofil integriert werden. Dadurch, dass die Verstärkung in der Form des herzustellenden Kunststoffprofils den Formeintritten zugeführt wird, wird eine besonders gleichmäßige und somit stabile und zuverlässige Herstellung des Verfahrens gewährleistet.

Eine Vorrichtung zur Lösung der eingangs genannten Aufgabe weist die Merkmale des Anspruchs 9 auf. Dadurch, dass die Form aus mindestens zwei, bezogen auf den Querschnitt des Kunststoffprofils, getrennte Formteile gebildet ist, die zeitlich versetzt entgegen einer Herstellungsrichtung des Kunststoffprofils entlang eines Abschnitts desselben Kunststoffprofils bewegbar ist, lässt sich nahezu jedes beliebige individuelle Kunststoffprofil herstellen. Dabei kann die Form aus einer Vielzahl von Formteilen bestehen, die sich parallel zu einer Längsachse des Kunststoffprofils um dieses anordnen und zusammen die Form bilden. Dabei ist die Form bzw. sind die Formteile nicht auf gradlinige Kunststoffprofile eingeschränkt, sondern können vielmehr auch einen Radius zur Herstellung gekrümmter oder sogar ringförmiger Kunststoffprofile aufweisen.

Bevorzugt sieht es die Erfindung weiter vor, dass die mindestens zwei Formteile periodisch im Wechsel, bzw. schrittweise, insbesondere zumindest zeitweise gleichzeitig und/oder zeitlich getrennt entgegen einer Herstellungsrichtung des Kunststoffprofils entlang eines Abschnitts desselben Kunststoffprofils bewegbar sind. Je nach Form des herzustellenden Kunststoffprofils ist es vorgesehen, dass Formteile, die längere Wege auf dem Kunststoffprofil aufgrund der Krümmung zurücklegen müssen, öfter oder über längere Abschnitte bewegt werden, als Formteile die an einem Innenradius des Kunststoffprofils angeordnet sind. Die Bewegung entgegen der Herstellungsrichtung der einzelnen Formteile ist zeitlich aufeinander abgestimmt. Somit ist es vorgesehen, dass sich die Bewegungen teilweise zeitlich überlappen. Es ist jedoch auch vorgesehen, dass ein nächstes Formteil sich erst bewegt, wenn ein vorheriges Formteil seine Bewegung komplett abgeschlossen hat.

Des Weiteren ist es vorgesehen, dass die mindestens zwei Formteile diskontinuierlich bzw. schrittweise hin- und herbewegbar sind und sich dabei wenigstens teilweise entlang einer Längsachse des Kunststoffprofils gegenüberliegen bzw. überragen. Bei ihrer Bewegung entlang des Kunststoffprofils befinden sich die mindestens zwei Formteile stets, zumindest teilweise übereinander, um sich so gegenseitig Halt zu geben bzw. abzustützen. Auf diese Weise hat jeweils ein anderes Formteil zumindest bereichsweise eine Fläche, gegen die sie beim Bewegen entgegen der Herstellungsrichtung Druck aufbauen und so das Kunststoffprofil bilden kann.

Ein Weiteres bevorzugtes Ausführungsbeispiel sieht es außerdem vor, dass mindestens ein Formteil als Hohlprofil und das mindestens eine weitere Formteil als Kern, der mit dem Hohlprofil korrespondiert, ausgebildet ist und das mindestens eine Hohlprofil und der mindestens eine Kern zeitlich versetzt entgegen einer Herstellungsrichtung des Kunststoffprofils entlang eines Abschnitts desselben Kunststoffprofils bewegbar sind, vorzugsweise der mindestens eine Kern in dem mindestens einen Hohlprofil bewegbar ist. Auf diese Weise lassen sich im Pilgerschrittverfahren auch Rohre mit einer Verstärkung herstellen, ohne dass sich beim Formeintritt der Verstärkung ein Faserstau bildet. Bei diesem Ausführungsbeispiel der Erfindung ist es vorteilhaft, wenn das als Kern ausgebildete Formteil länger ist als das als Hohlprofil ausgebildete Formteil. Es bewegt sich somit immer zunächst der Kern entgegen der Herstellungsrichtung, worauf das Hohlprofil das Rohr formend dem Kern folgt.

Insbesondere ist es vorgesehen, dass mindestens ein Haltemittel zur Herstellung einer lösbaren Greifverbindung mit dem fertigen Kunststoffprofil außerhalb der Form, insbesondere vor der Form ausgebildet ist und/oder dass jedes Haltemittel relativ zum Kunststoffprofil bewegbar ist. Dieses Haltemittel ist derart ausgebildet, dass es genau der Form des herzustellenden Kunststoffprofils entspricht und somit dieses voll umschließen kann.

Weiter ist es vorgesehen, dass die Formteile sich gegenüberliegende Formflächen, insbesondere geschlossene Formflächen, aufweisen, die miteinander korrespondieren, vorzugsweise eine Formfläche relativ zum Querschnitt des Kunststoffprofils konkav und die gegenüberliegende Formfläche entsprechend konvex ausgebildet ist oder die Formflächen ringförmig ausgebildet sind, insbesondere ein Formteil, vorzugsweise das konvexe Formteil im Bezug zu der Längsachse des Kunststoffprofils länger ist als das andere Formteil. Insbesondere ist es denkbar, dass die Formflächen individuell und beliebig ausgebildet sind. Die Formflächen verlaufen stets parallel zu der Oberfläche des herzustellenden Kunststoffprofils.

Gemäß eines weiteren Ausführungsbeispiels der vorliegenden Erfindung ist es vorgesehen, dass die Seiten bzw. Stirnseiten der Formteile die zuerst über die Verstärkung bewegt werden, bzw. die der Herstellungsrichtung abgewandten Seiten der Formteile, an gegenüberliegenden Formflächen Einlaufschrägen zur Aufnahme der Verstärkung aufweisen. Diese Einlaufschrägen können verschiedene Winkel, insbesondere relativ zur Herstellungsrichtung, aufweisen und sind in ihrer Form bedingt durch die Form des herzustellenden Kunststoffprofils bzw. von der Anordnung des Depots bzw. der Formteile.

Des Weiteren ist es vorgesehen, dass in Herstellungsrichtung vor dem Haltemittel eine Trenneinheit, insbesondere eine Säge zum Zersägen des geformten Kunststoffprofils angeordnet ist. Dadurch lassen sich die hergestellten Kunststoffprofile direkt in vorbestimmte Längen zerteilen und beispielsweise für den Transport verpacken. Dadurch, dass das Zerteilen direkt in Herstellungsrichtung betrachtet vor dem Haltemittel stattfindet, muss das Profil zum bzw. nach Zerteilen nicht erneut in ein Haltemittel eingespannt werden, sondern erfolgt direkt bei der Herstellung.

Nachfolgend werden bevorzugte Ausführungsbeispiele der Erfindung anhand der Zeichnung näher erläutert. In dieser zeigen:
- Fig. 1: eine perspektivische, schematische Ansicht eines Ausführungsbeispiels einer erfindungsgemäßen Vorrichtung,
- Fig. 2a: eine schematische Ansicht eins Ausführungsbeispiels einer erfindungsgemäßen Vorrichtung in einer Ausgangsstellung,
- Fig. 2b: eine schematische Ansicht der Vorrichtung der Fig. 2a nach einem ersten Arbeitsschritt,
- Fig. 2c: eine schematische Ansicht der Vorrichtung der Fig. 2a nach einem zweiten Arbeitsschritt,
- Fig. 2d: eine schematische Ansicht der Vorrichtung der Fig. 2a nach einem dritten Arbeitsschritt,
- Fig. 2e: eine schematische Ansicht der Vorrichtung der Fig. 2a nach einem vierten Arbeitsschritt,
- Fig. 3a: eine schematische Ansicht eines weiteren Ausführungsbeispiels einer erfindungsgemäßen Vorrichtung in einer Ausgangsstellung,
- Fig. 3b: eine schematische Ansicht der Vorrichtung der Fig. 3a nach einem ersten Arbeitsschritt,
- Fig. 3c: eine schematische Ansicht der Vorrichtung der Fig. 3a nach einem zweiten Arbeitsschritt,
- Fig. 3d: eine schematische Ansicht der Vorrichtung der Fig. 3a nach einem dritten Arbeitsschritt,
- Fig. 3e: eine schematische Ansicht der Vorrichtung der Fig. 3a nach einem vierten Arbeitsschritt,
- Fig. 4a: eine schematische Ansicht eines weiteren Ausführungsbeispiels einer erfindungsgemäßen Vorrichtung in einer Ausgangsstellung,
- Fig. 4b: eine schematische Ansicht der Vorrichtung der Fig. 4a nach einem ersten Arbeitsschritt,
- Fig. 4c: eine schematische Ansicht der Vorrichtung der Fig. 4a nach einem zweiten Arbeitsschritt,
- Fig. 4d: eine schematische Ansicht der Vorrichtung der Fig. 4a nach einem dritten Arbeitsschritt,
- Fig. 4e: eine schematische Ansicht der Vorrichtung der Fig. 4a nach einem vierten Arbeitsschritt,
- Fig. 4f: eine schematische Ansicht der Vorrichtung der Fig. 4a nach einem fünften Arbeitsschritt,
- Fig. 5a: eine perspektivische, schematische Ansicht eines weiteren Ausführungsbeispiels einer erfindungsgemäßen Vorrichtung nach einem ersten Arbeitsschritt,
- Fig. 5b: eine schematische Ansicht der Vorrichtung der Fig. 5a nach einem zweiten Arbeitsschritt, und
- Fig. 5c: eine schematische Ansicht der Vorrichtung der Fig. 5a nach einem dritten Arbeitsschritt.

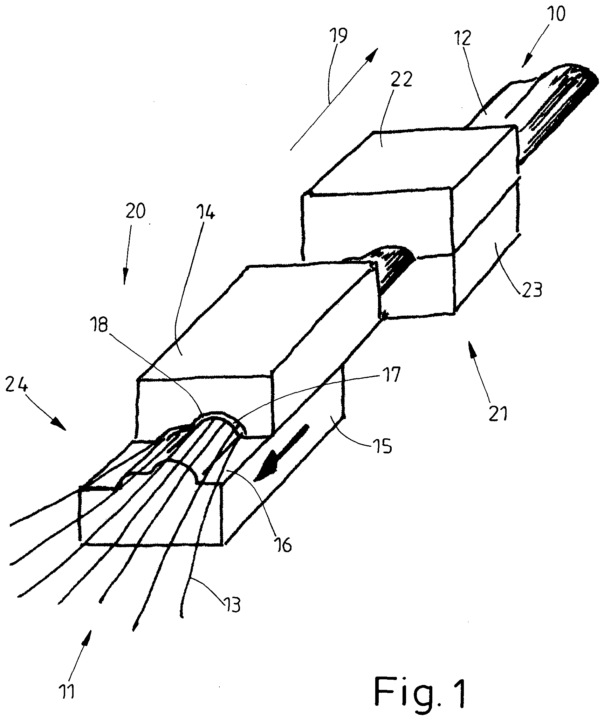

Die Figuren zeigen schematisch Ausführungsbeispiele der erfindungsgemäßen Vorrichtung, die auch zur Durchführung des erfindungsgemäßen Verfahrens dienen.
Bei der Vorrichtung handelt es sich um eine Pultrusionsvorrichtung für ein Kunststoffprofil 10 mit einer innenliegenden Verstärkung 11 und einem diesen umgebenden Kunststoff 12, bei dem es sich vorzugsweise um einen Duroplast handeln kann (Fig. 1). Im für anschauliche Zwecke dargestellte Ausführungsbeispiel der Fig. 1 wird davon ausgegangen, dass die Verstärkung 11 aus sieben endlosen Strängen 13 aus vorzugsweise hochzugsfesten Fasern, beispielsweise Kohlefasern, besteht. Im Kunststoff 12 des Kunststoffprofils 10 können aber auch beliebige andere Verstärkungen 11 eingebettet sein, beispielsweise Gewebe und/oder Gewirke, bzw. Kombination der Stränge 13 mit Geweben und/oder Gewirken. Auch ist die Offenbarung auf die in den Figuren gezeigten sieben Stränge 13 nicht eingeschränkt.

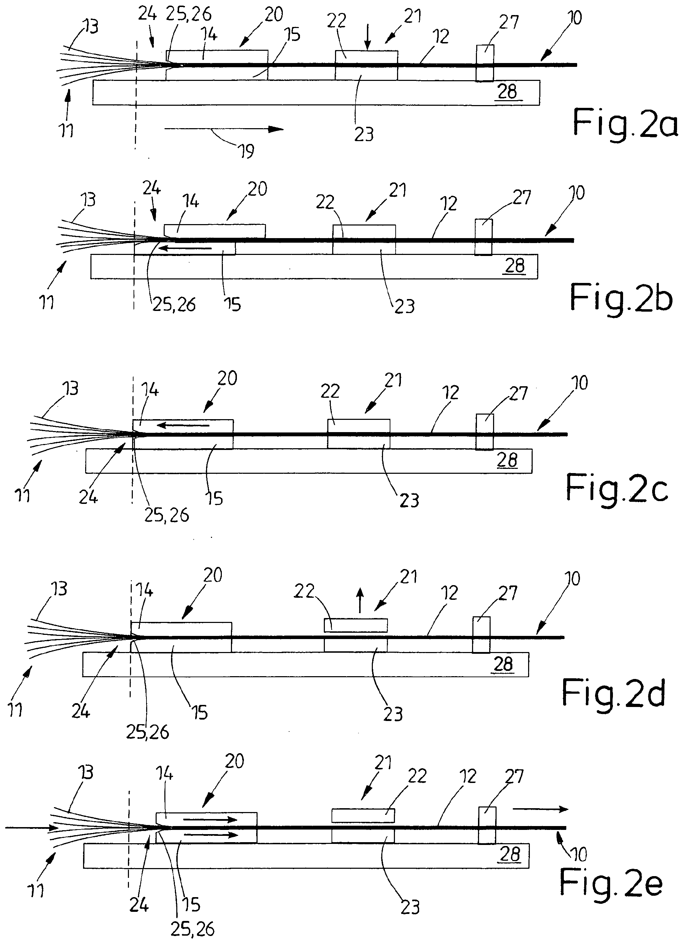

Mit der schematisch gezeigten Vorrichtung und dem Verfahren lässt sich durch Pultrusion mit einer entsprechenden Form bzw. mit entsprechenden Formteilen einen beliebigen Verlauf aufweisendes Kunststoffprofil 10 herstellen. In den Figuren ist exemplarisch ein gerades Kunststoffprofil gezeigt. Es ist aber ausdrücklich auch vorgesehen, mit der Vorrichtung und dem Verfahren Kunststoffprofile 10 herzustellen, die über einen gebogenen Verlauf bzw. über einen Radius, insbesondere über einen beliebigen räumlichen (dreidimensionalen) Verlauf verfügen.
Die gezeigte Vorrichtung der Fig. 1 weist ein erstes Formteil 14 und ein zweites Formteil 15 auf, deren Formflächen 16 und 17 der Gestallt bzw. Oberflächenform des herzustellenden Kunststoffprofils 10 entsprechen. Eine Längsmittelachse der Formteile 14 und 15 ist demnach genauso ausgerichtet, wie das herzustellende Kunststoffprofil 10. Die konvexe Form der Formfläche 17 des zweiten Formteils 15 entspricht in ihrem Verlauf der Formfläche 16 des ersten, konkaven Formteils 14. Die Formflächen 16 und 17 sind derart aufeinander abgestimmt, dass sie im zusammengefügten Zustand einen Spalt bzw. einen Abstand 18 zueinander aufweisen. Dieser Abstand 18 entspricht genau der Dicke des Kunststoffprofils 10. Die konkave Formfläche 16 des ersten Formteils 14 kann auch zur Herstellung beliebiger Profile von der konvexen Formfläche 17 des zweiten Formteils 15 abweichen.
Das erste Formteil 14 und das zweite Formteil 15 sind derart gelagert, dass sie einzeln und unabhängig voneinander entgegen einer Herstellungsrichtung 19 des Kunststoffprofils 10 entlang des Kunststoffprofils 10, aber auch zusammen in Herstellungsrichtung 19, bewegbar sind. Die Vorrichtung ist nicht auf zwei Formteile beschränkt, vielmehr ist es denkbar, dass um das Kunststoffprofil 10 eine Vielzahl von Formteile zur Bildung desgleichen vorgesehen sein können.
In Herstellungsrichtung 19 vor der Form 20 umgreift ein Greifer 21 das Kunststoffprofil 10. Der Greifer 21 weist ein erstes Greiferteil 22 und ein zweites Greiferteil 23 auf. Das erste Greiferteil 22 und das zweite Greiferteil 23 sind senkrecht zu der Herstellungsrichtung 19 derart auf- und abbewegbar, dass sie das Kunststoffprofil 10 freigeben können, oder es festhalten bzw. ergreifen können. Dazu sind innenliegende Flächen des ersten und zweiten Greiferteils 22 und 23 derart ausgebildet, dass sie das Kunststoffprofil 10 formschlüssig umgreifen können. Der Greifer 21 kann stationär ausgebildet sein, oder sich entlang des Kunststoffprofils 10 hin- und herbewegen (Fig. 1).
In Herstellungsrichtung 19 gesehen befindet sich hinter der Form 20 ein nicht dargestelltes Materialdepot, von dem die Verstärkung 11 bzw. die Stränge 13 abgespult werden. Die Stränge 13 werden derart dem ersten Formteil 14 und dem zweiten Formteil 15 zugeführt, dass sie bereits der Gestalt des herzustellenden Kunststoffprofils 10 entsprechen. Zwischen der Form 20 und dem Materialdepot werden die Stränge 13 vorgespannt, damit sie zielgerichtet von den Formteilen 14 und 15 eingezogen werden können. Damit die Stränge 13 an den Kanten des ersten und zweiten Formteils 14 und 15 keine zu großen Reibkräfte erfahren, weisen die hinteren Enden 24 des ersten und des zweiten Formteils 14 und 15 jeweils Einlaufschrägen 25 und 26 auf. Entlang dieser Einlaufschräge 25 und 26 laufen die Stränge 13 in die Form 20 ein (bspw. Fig. 2a).

In den Figuren 2a bis 2e ist ein Ausführungsbeispiel eines erfindungsgemäßen Verfahrens schematisch am Beispiel eines geraden Kunststoffprofils 10 dargestellt. Das gleiche Verfahren ist jedoch auch auf gleiche Weise mit einer entsprechenden Form 20 und einem entsprechenden Greifer 21 anwendbar, um ein gekrümmtes Kunststoffprofil 10 anzufertigen.
Die Fig. 2a stellt eine Ausgangsstellung dar. In dieser Ausgangsstellung schließen das erste und das zweite Greiferteil 22 und 23 des Greifers 21 das Kunststoffprofil 10 entlang eines Umfangs ein. Die Form 20, der Greifer 21 und eine Trenneinheit 27, wie beispielsweise eine Säge oder eine Fräse sind auf einer Schiene 28 installiert.
In einem ersten Arbeitsschritt gemäß der Fig. 2b wird das zweite Formteil 15 entgegen der Herstellungsrichtung 19 auf der Schiene 28 zurückbewegt. Das erste Formteil 14, als auch der Greifer 21 verändern dabei ihre Position relativ zu dem Kunststoffprofil 10 nicht. Bei der Bewegung des zweiten Formteils 15 wird über die Einlaufschräge 26 des zweiten Formteils 15 Stränge 13 mit der Formfläche 17 des zweiten Formteils 15 in Kontakt gebracht.

In einem dritten Arbeitsschritt gemäß Fig. 2c wird das erste Formteil 14 gleichermaßen wie das zweite Formteil 15 entgegen der Herstellungsrichtung 19 auf dem Kunststoffprofil 10 zurückbewegt. Dabei bewegt sich das erste Formteil 14 über die Verstärkung 11 bzw. über die einlaufenden Stränge 13. Die in den Figuren 2a bis 2e dargestellten Pfeile kennzeichnen Bewegungsrichtungen der einzelnen Elemente. Durch die Bewegung des ersten Formteils 14 über das zweite Formteil 15 wird das Kunststoffprofil 10 entsprechend der Formflächen 16 und 17 aus der Verstärkung 11 und dem Kunststoff 12 geformt.

In einem dritten Arbeitsschritt gemäß Fig. 2d wird das erste Greiferteil 22 senkrecht zur Herstellungsrichtung 19 bewegt, so dass das Kunststoffprofil 10 von dem Greifer 21 freigegeben wird. Im Anschluss an diese Freigabe des Kunststoffprofils 10 durch den Greifer 21 bewegt sich die Form 20 mit samt den Formteilen 14, 15 und dem Kunststoffprofil 10 in Herstellungsrichtung 19 vor. Bei dieser Bewegung wird gleichfalls Verstärkung 11 von dem Materialdepot abgespult. Sobald sich die Form 20 wieder in einer Ausgansstellung befindet, schließt sich der Greifer 21 gemäß Fig. 2a wieder um das Kunststoffprofil 10 und die Schritte der Fig. 2a bis 2e wiederholen sich.

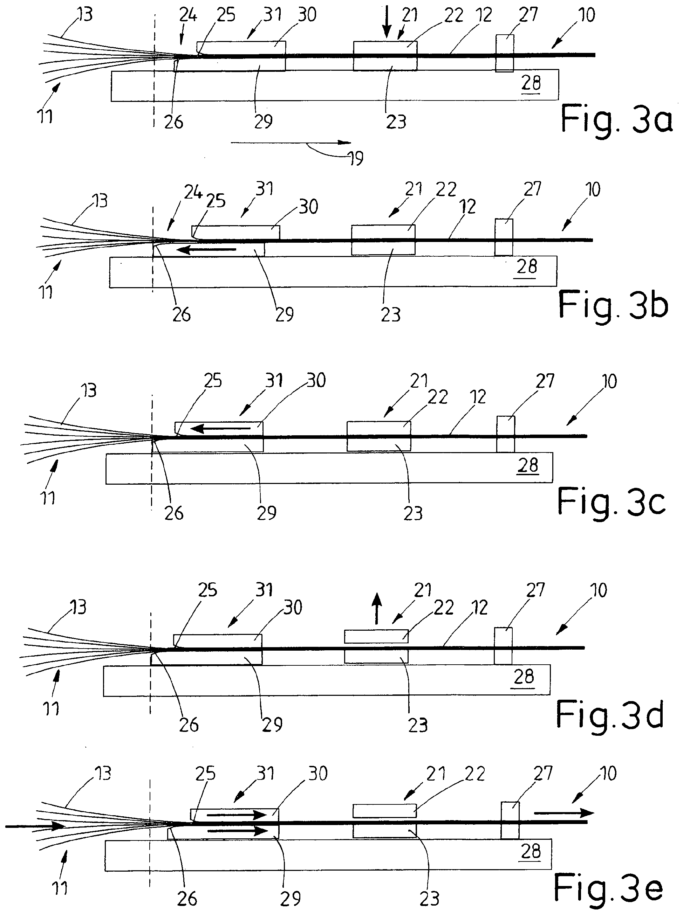

In den Figuren 3a bis 3e ist ein weiteres Ausführungsbeispiel der erfindungsgemäßen Vorrichtung dargestellt, mit der sich das erfindungsgemäßen Verfahrens durchführen lässt. Der einzige Unterschied des in den Figuren 3a bis 3e dargestellten Ausführungsbeispiels zu dem in den Figuren 2a bis 2e dargestellten Ausführungsbeispiel besteht darin, dass ein zweites Formteil 29 länger ist als ein erstes Formteil 30. Elemente die in den Figuren 3a bis 3e identisch sind mit denen aus den Figuren 2a bis 2e werden mit gleichen Bezugsziffern gekennzeichnet. Das zweite Formteil 29 wird gemäß Fig. 3b vor dem ersten Formteil 30 entgegen der Herstellungsrichtung 19 zur Herstellung des Kunststoffprofils 10 bewegt. Es ist aber auch denkbar, dass das erste Formteil länger ist als das zweite Formteil.

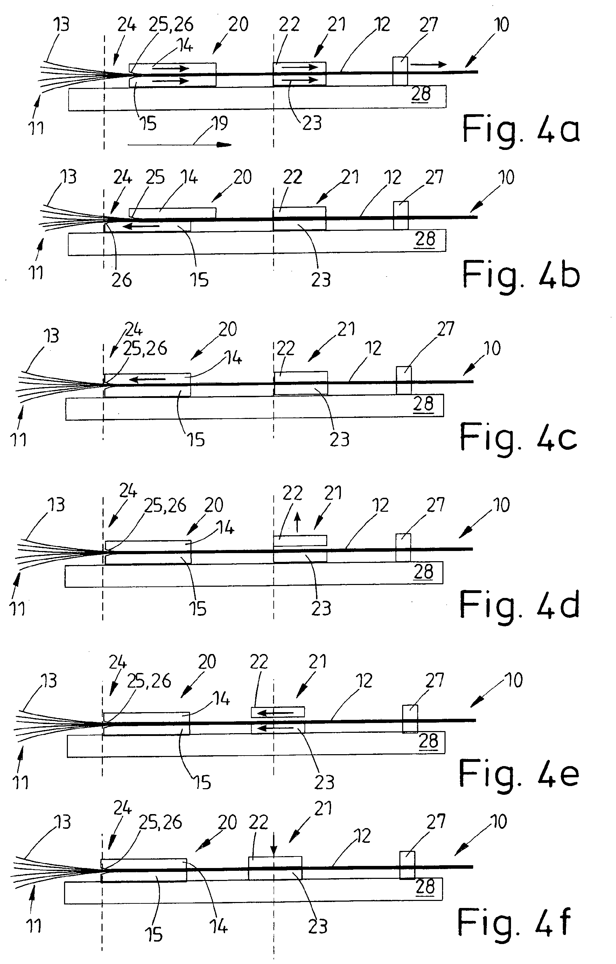

In den Figuren 4a bis 4f wird ein weiteres Ausführungsbeispiel des erfindungsgemäßen Verfahrens schematisch dargestellt. Die in diesen Figuren dargestellte Vorrichtung gleicht im Wesentlichen der in den Figuren 2a und 2e dargestellten Vorrichtung. Daher werden gleiche Elemente auch mit gleichen Bezugsziffern gekennzeichnet.

In der Fig. 4a ist eine Ausgangsstellung des Verfahrens dargestellt, bei der sowohl der Greifer 21 mit seinen beiden Greiferteilen 22 und 23 und die Form 20 mit den Formteilen 14 und 15 auf der Schiene 28 in Herstellungsrichtung 19 vorbewegt werden. Gleichzeitig wird auch das Kunststoffprofil 10 samt der Verstärkung in Herstellungsrichtung 19 bewegt. Die drei folgenden Arbeitsschritte der Figuren 4b bis 4d gleichen den Arbeitsschritten aus den Figuren 2b bis 2d. Im anschließenden Arbeitsschritt wird der Greifer 21 dessen Greiferteile 22 und 23 sich in einer von dem Kunststoffprofil 10 gelösten Stellung befinden, entgegen der Herstellungsrichtung 19 in Richtung de Form 20 bewegt (Fig. 4e).

Im darauf folgenden Arbeitsschritt ergreift der Greifer 21 das Kunststoffprofil 10, indem sich das erste Greiferteil 22 senkrecht zur Herstellungsrichtung 19 absenkt und zusammen mit dem zweiten Greiferteil 23 das Kunststoffprofil 10 fest umgreift (Fig. 4f). um wieder in die Ausgangsstellung zurück zu gelangen, wird nun das Kunststoffprofil 10 mit samt der Verstärkung 11 in Herstellungsrichtung 19 geschoben, und zwar mit geschlossener Form 20 und Greifer 21. Dadurch, dass das Kunststoffprofil 10 im wesentlichen von dem Greifer 21 in Herstellungsrichtung 19 gezogen wird, müssen die Formteile 14 und 15 nicht sehr stark zusammengepresst werden. Dies kann vorteilhaft sein, wenn durch die Form 20 ein besonders komplexes oder empfindliches Kunststoffprofil 10 hergestellt wird.

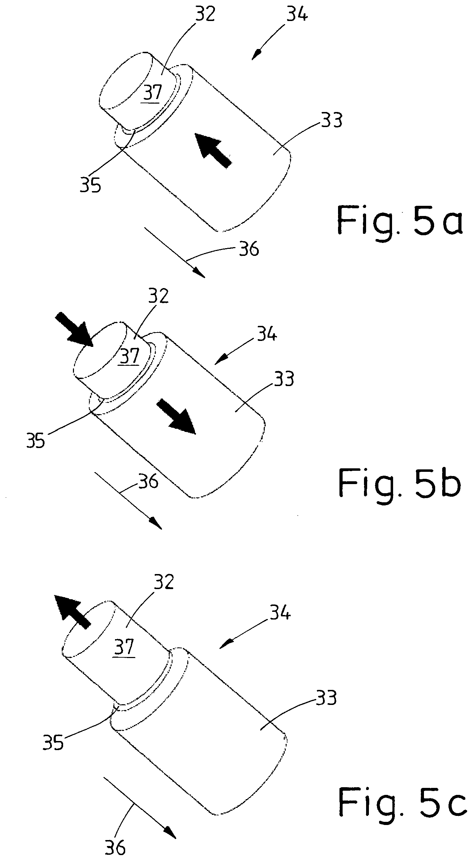

In den Figuren 5a bis 5c ist ein weiteres Ausführungsbeispiel der erfindungsgemäßen Vorrichtung dargestellt mit dem sich das erfindungsgemäßen Verfahrens durchführen lässt. In den Figuren 5a bis 5c ist das erste Formteil 32 als zylindrischer Kern bzw. Zylinder ausgebildet. Ein zweites Formteil 33 der Form 34 ist als sich um das erste Formteil 32 schließender Hohlzylinder ausgebildet. Zwischen dem ersten Formteil 32 und dem zweiten Formteil 33 wird aus der Verstärkung und dem Kunststoff ein nicht dargestelltes rohrartiges Kunststoffprofil 10 geformt. Das erste Formteil 32 ist länger ausgebildet als das zweite Formteil 33.

Zur Herstellung des rohrartigen Kunststoffprofils 10 wird ein Kunststoff und eine Verstärkung in einen Zwischenraum 35, der die Form des herzustellenden Kunststoffprofils 10 beschreibt, geformt. Dazu wird zunächst das zweite Formteil 33 über den ersten Formteil 32 in Herstellungsrichtung 36 bewegt (Fig. 5a). Anschließend wird das erste Formteil 32 zusammen mit dem zweiten Formteil 33 und dem Kunststoffprofil 10 in Herstellungsrichtung 36 vorbewegt. Dabei sind Ausführungsbeispiele denkbar, bei denen, wie in den Figuren 2a bis 2e und 4a bis 4f ein nicht dargestellter Greifer 21 stationär ist oder sich mit bewegt.

In einem anschließenden Arbeitsschritt, wird das erste Formteil 32 durch das zweite Formteil 33 entgegen der Herstellungsrichtung 36 zurückbewegt (Fig. 5c). Dabei legen sich die nicht dargestellte Verstärkung 11 bzw. die Stränge 13 auf eine Oberfläche 37 des ersten Formteils 32. Im Anschluss wird gemäß Fig. 5a) das zweite Formteil 33 über das erste Formteil 32 entgegen der Herstellungsrichtung 36 bewegt, sodass in dem Zwischenraum 35 das herzustellende Kunststoffprofil 10 ausgeformt wird. Auch dieses Ausführungsbeispiel ist nicht auf geradlinige Hohlprofile bzw. Rohre beschränkt, sondern vielmehr durch entsprechende Ausbildung der Formteile auch für die Herstellung gekrümmter Hohlprofile anwendbar.

### Bezugszeichenliste

- 10: 10 Kunststoffprofil
- 11: Verstärkung
- 12: Kunststoff
- 13: Strang
- 14: erstes Formteil
- 15: zweites Formteil
- 16: Formfläche
- 17: Formfläche
- 18: Abstand
- 19: Erstellungsrichtung
- 20: Form
- 21: Greifer
- 22: erstes Greiferteil
- 23: zweites Greiferteil
- 24: hinters Ende
- 25: Einlaufschräge
- 26: Einlaufschräge
- 27: Trenneinheit
- 28: Schiene
- 29: zweites Formteil
- 30: erstes Formteil
- 31: Form
- 32: erstes Formteil
- 33: zweites Formteil
- 34: Form
- 35: Zwischenraum
- 36: Herstellungsrichtung
- 37: Oberfläche

## Patentansprüche

1. Verfahren zur Herstellung eines eine durchgehende Verstärkung (11) aus Strängen (13), Geweben und/oder dergleichen aufweisenden, vorzugsweise gekrümmten, Kunststoffprofils (10) mittels Pultrusion, wobei eine Form (20, 34, 34) entgegen einer Herstellungsrichtung (19) des Kunststoffprofils (10) entlang eines Abschnitts desselben Kunststoffprofils (10) bewegt wird und dabei das Kunststoffprofil (10) von mindestens einem in Herstellungsrichtung (19) betrachtet vor der Form (20, 34, 34) positioniertem Haltemittel festgehalten wird, **dadurch gekennzeichnet, dass** die Form (20, 34, 34) aus mindestens zwei bezogen auf den Querschnitt des Kunststoffprofils (10) getrennte Formteile (14, 15, 29, 30, 32, 33) gebildet wird, die zeitlich versetzt entgegen einer Herstellungsrichtung (19) des Kunststoffprofils (10) entlang eines Abschnitts desselben Kunststoffprofils (10) bewegt werden.

2. Verfahren nach Anspruch 1, **dadurch gekennzeichnet, dass** die mindestens zwei Formteile (14, 15, 29, 30, 32, 33) periodisch im Wechsel, insbesondere zumindest zeitweise gleichzeitig bzw. getrennt entgegen einer Herstellungsrichtung (19) des Kunststoffprofils (10) entlang eines Abschnitts desselben Kunststoffprofils (10) bewegt werden.

3. Verfahren nach Anspruch 1 oder 2, **dadurch gekennzeichnet, dass** die mindestens zwei Formteile (14, 15, 29, 30, 32, 33) diskontinuierlich bzw. schrittweise, vorzugsweise parallel zueinander wenigstens teilweise gegenüberliegend oder überragend entlang einer Längsachse des Kunststoffprofils (10), bewegt werden, wobei insbesondere nur während einer Rückwärtsbewegung der Formteile (14, 15, 29, 30, 32, 33) entgegen der Herstellungsrichtung (19) eine Relativbewegung der Formteile (14, 15, 29, 30, 32, 33) zum Kunststoffprofil (10) stattfindet.

4. Verfahren nach einem der vorhergehenden Ansprüche, **dadurch gekennzeichnet, dass** das Kunststoffprofil (10) während der Bewegung der mindestens zwei Formteile (14, 15, 29, 30, 32, 33) auf dem relativ zu denselben stillstehenden Kunststoffprofil (10) festgehalten wird, vorzugsweise durch mindestens ein Haltemittel, insbesondere einen Greifer (21) festgehalten wird.

5. Verfahren nach einem der vorhergehenden Ansprüche, **dadurch gekennzeichnet, dass** zunächst ein erstes Formteil (14, 30, 32), vorzugsweise ein konvexes Formteil (14, 30, 32), entgegen der Herstellungsrichtung (19) entlang des stillstehenden Kunststoffprofils (19) bewegt wird und anschließend ein zweites, insbesondere kürzeres Formteil (15, 29, 33), vorzugsweise ein konkaves Formteil (15, 29, 33), gleichermaßen wie das erste Formteil (14, 30, 32) bewegt wird, wobei bei jeder Bewegung eines Formteils (14, 15, 29, 30, 32, 33) entgegen der Herstellungsrichtung (19) zumindest ein Teil eines neu hergestellten Abschnitts des Kunststoffprofils (10) von dem sich bewegenden Formteil (14, 15, 29, 30, 32, 33) entformt bzw. freigegeben wird.

6. Verfahren nach einem der vorhergehenden Ansprüche, **dadurch gekennzeichnet, dass** das mindestens eine Haltemittel in Phasen, in denen die Formteile (14, 15, 29, 30, 32, 33) stillstehen, außer Kontakt mit dem Kunststoffprofil (10) gebracht wird und sich die mindestens zwei Formteile (14, 15, 29, 30, 32, 33) zusammen mit dem Kunststoffprofil (10) in Herstellungsrichtung (19) auf das mindestens eine stillstehende Haltemittel zu bewegen und das mindestens eine Haltemittel anschließend wieder zum Erreichen einer Ausgangsstellung in Kontakt mit dem Kunststoffprofil (10) gebracht wird.

7. Verfahren nach einem der vorhergehenden Ansprüche, **dadurch gekennzeichnet, dass** das mindestens eine Haltemittel in Phasen, in denen die Formteile (14, 15, 29, 30, 32, 33) stillstehen, außer Kontakt mit dem Kunststoffprofil (10) gebracht wird und relativ zum stillstehenden Kunststoffprofil (10) in Richtung der ebenfalls stillstehenden Formteilen (14, 15, 29, 30, 32, 33) bewegt wird, vorzugsweise entgegen der Herstellungsrichtung (19) zurückbewegt wird, wieder in Kontakt mit dem Kunststoffprofil (10) gebracht wird und anschließend zum Erreichen einer Ausgangsstellung die Formteile (14, 15, 29, 30, 32, 33) zusammen mit dem Kunststoffprofil (10) und dem Haltemittel in Herstellungsrichtung bewegt werden.

8. Verfahren nach einem der vorhergehenden Ansprüche, **dadurch gekennzeichnet, dass** beim Bewegen der Formteile (14, 15, 29, 30, 32, 33) die Verstärkung zwischen den Formteilen (14, 15, 29, 30, 32, 33) und einem Materialdepot vorgespannt wird, vorzugsweise über das konvexe Formteil (14, 15, 29, 30, 32, 33) vorgespannt wird, insbesondere die Verstärkung (11) in der Gestallt des herzustellenden Kunststoffprofils (10) vorgespannt wird.

9. Pultrusionsvorrichtung zur Herstellung eines eine durchgehende Verstärkung (11) aus Strängen (13), Geweben und/oder dergleichen aufweisenden, vorzugsweise gekrümmten, Kunststoffprofils (10), mit einer Form (20, 34, 34) die entgegen einer Herstellungsrichtung (19) des Kunststoffprofils (10) entlang eines Abschnitts des Kunststoffprofils (10) bewegbar ist und mindestens einem in Herstellungsrichtung (19) betrachtet vor der Form (20, 34, 34) positionierten Haltemittel zum zumindest vorübergehenden Festhalten des Kunststoffprofils, **dadurch gekennzeichnet, dass** die Form (20, 34, 34) aus mindestens zwei bezogen auf den Querschnitt des Kunststoffprofils (10) getrennte Formteile (14, 15, 29, 30, 32, 33) gebildet ist, die zeitlich versetzt entgegen einer Herstellungsrichtung (19) des Kunststoffprofils (10) entlang eines Abschnitts desselben Kunststoffprofil (10) bewegbar ist.

10. Pultrusionsvorrichtung nach Anspruch 9, **dadurch gekennzeichnet, dass** die mindestens zwei Formteile (14, 15, 29, 30, 32, 33) periodisch im Wechsel bzw. schrittweise, insbesondere zumindest zeitweise gleichzeitig und/oder zeitlich getrennt entgegen einer Herstellungsrichtung (19) des Kunststoffprofils (10) entlang eines Abschnitts desselben Kunststoffprofils (10) bewegbar sind.

11. Pultrusionsvorrichtung nach Anspruch 9 oder 10, **dadurch gekennzeichnet, dass** die mindestens zwei Formteile (14, 15, 29, 30, 32, 33) diskontinuierlich bzw. schrittweise hin- und herbewegbar sind und sich dabei wenigstens teilweise entlang einer Längsachse des Kunststoffprofils (10) gegenüberliegen bzw. überragen.

12. Pultrusionsvorrichtung nach einem der Ansprüche 9 bis 11, **dadurch gekennzeichnet, dass** mindestens ein Formteil (33) als Hohlprofil und mindestens ein weiteres Formteil (32) als Kern, der mit dem Hohlprofil korrespondiert, ausgebildet ist und das mindestens eine Hohlprofil und der mindestens eine Kern zeitlich versetzt entgegen einer Herstellungsrichtung (19) des Kunststoffprofils (10) entlang eines Abschnitts desselben Kunststoffprofils (10) bewegbar sind, vorzugsweise der mindestens eine Kern in dem mindestens einem Hohlprofil bewegbar ist.

13. Pultrusionsvorrichtung nach einem der Ansprüche 9 bis 12, **dadurch gekennzeichnet, dass** mindestens ein Haltemittel, vorzugsweise ein zwei Greiferteile (22, 23) aufweisender Greifer (21), zur Herstellung einer lösbaren Greifverbindung mit dem fertigen Kunststoffprofil (10) außerhalb der Form (20, 34, 34), insbesondere vor der Form (20, 34, 34), ausgebildet ist und/oder das oder jedes Haltemittel relativ zum Kunststoffprofil (10) bewegbar ist.

14. Pultrusionsvorrichtung nach einem der Ansprüche 9 bis 13, **dadurch gekennzeichnet, dass** die Formteile (14, 15, 29, 30, 32, 33) sich gegenüberliegende Formflächen (16, 17), insbesondere geschlossene Formflächen (16, 17), aufweisen, die mit einander korrespondieren, vorzugsweise eine Formfläche (16, 17) konkav und die gegenüberliegende Formfläche (16, 17) konvex ausgebildet ist oder die Formflächen (16, 17) ringförmig ausgebildet sind, insbesondere ein Formteil (29), vorzugsweise das konvexe Formteil (19), länger ist, als das andere Formteil (30).

15. Pultrusionsvorrichtung nach einem der Ansprüche 9 bis 14, **dadurch gekennzeichnet, dass** die Seiten der Formteile (14, 15, 29, 30) die zuerst über die Verstärkung bewegt werden, bzw. die der Herstellungsrichtung (19) abgewandten Seiten der Formteile (14, 15, 29, 30), an gegenüberliegenden Formflächen (16, 17) Einlaufschrägen (26, 27) zur Aufnahme der Verstärkung (11) aufweisen.

16. Pultrusionsvorrichtung nach einem der Ansprüche 9 bis 15, **dadurch gekennzeichnet, dass** in Herstellungsrichtung (19) vor dem Haltemittel eine Trenneinheit, insbesondere einer Säge (27) zum Zersägen des geformten Kunststoffprofils (10) angeordnet ist.

## Claims

1. A method for the production of a preferably curved plastic profile (10) having a continuous reinforcement (11) from strands (13), woven fabrics, and/or the like by way of pultrusion, wherein a mould (20, 34, 34) is moved counter to a production direction (19) of the plastic profile (10) along a portion of said plastic profile (10), and the plastic profile (10) herein is retained by at least one holding means that, when viewed in the production direction (19), is positioned ahead of the mould (20, 34, 34), **characterized in that** the mould (20, 34, 34) is formed from at least two mould parts (14, 15, 29, 30, 32, 33) that in relation to the cross section of the plastic profile (10) are split and that are moved in a temporally offset manner counter to a production direction (19) of the plastic profile (10) along a portion of said plastic profile (10).

2. The method as claimed in claim 1, **characterized in that** the at least two mould parts (14, 15, 29, 30, 32, 33) are moved in a periodically alternating manner, in particular at least at times simultaneously or separately, respectively, counter to a production direction (19) of the plastic profile (10) along a portion of said plastic profile (10).

3. The method as claimed in claim 1 or 2, **characterized in that** the at least two mould parts (14, 15, 29, 30, 32, 33) are moved discontinuously or in steps, respectively, preferably in a mutually parallel manner, so as to be at least partially opposite or protruding along a longitudinal axis of the plastic profile (10), wherein a movement of the mould parts (14, 15, 29, 30, 32, 33) relative to the plastic profile (10) in particular takes place only during a reverse movement of the mould parts (14, 15, 29, 30, 32, 33) counter to the production direction (19).

4. The method as claimed in one of the preceding claims, **characterised in that** the plastic profile (10), during the movement of the at least two mould parts (14, 15, 29, 30, 32, 33) on the plastic profile (10) that is stationary relative to the latter, is retained, preferably by at least one holding means, in particular by a gripper (21).

5. The method as claimed in one of the preceding claims, **characterized in that** initially a first mould part (14, 30, 32), preferably a convex mould part (14, 30, 32) is moved counter to the production direction (19) along the stationary plastic profile (10), and subsequently a second and in particular shorter mould part (15, 29, 33), preferably a concave mould part (15, 29, 33) is moved in a manner likewise to that of the first mould part (14, 30, 32), wherein in the case of each movement of a mould part (14, 15, 29, 30, 32, 33) counter to the production direction (19) at least part of a newly produced portion of the plastic profile (10) is demoulded or released, respectively, from the moving mould part (14, 15, 29, 30, 32, 33).

6. The method as claimed in one of the preceding claims, **characterized in that** the at least one holding means in phases during which the mould parts (14, 15, 29, 30, 32, 33) are stationary is brought out of contact with the plastic profile (10), and the at least two mould parts (14, 15, 29, 30, 32, 33) to move conjointly with the plastic profile (10) in the production direction (19) toward the at least one stationary holding means, and the at least one holding means, in order to reach an initial position, is subsequently brought back into contact with the plastic profile (10).

7. The method as claimed in one of the preceding claims, **characterized in that** the at least one holding means in phases during which the mould parts (14, 15, 29, 30, 32, 33) are stationary is brought out of contact with the plastic profile (10) and is moved relative to the stationary plastic profile (10) in the direction of the likewise stationary mould parts (14, 15, 29, 30, 32, 33), preferably moved back counter to the production direction (19), is again brought into contact with the plastic profile (10), and subsequently the mould parts (14, 15, 29, 30, 32, 33), in order to reach an initial position, are moved conjointly with the plastic profile (10) and the holding means in the production direction.

8. The method as claimed in one of the preceding claims, **characterized in that** in the case of the mould parts (14, 15, 29, 30, 32, 33) moving, the reinforcement between the mould parts (14, 15, 29, 30, 32, 33) and a material reserve is pretensioned, preferably is pretensioned by way of the convex mould part (14, 15, 29, 30, 32, 33), the reinforcement (11) being pretensioned in particular in the shape of the plastic profile (10) to be produced.

9. A pultrusion device for the production of a preferably curved plastic profile (10) having a continuous reinforcement (11) from strands (13), woven fabrics, and/or the like, having a mould (20, 34, 34) which is movable counter to a production direction (19) of the plastic profile (10) along a portion of the plastic profile (10), and at least one holding means that, when viewed in the production direction (19), is positioned ahead of the mould (20, 34, 34), for at least temporarily retaining the plastic profile, **characterized in that** the mould (20, 34, 34) is formed from at least two mould parts (14, 15, 29, 30, 32, 33) that in relation to the cross section of the plastic profile (10) are split and that are movable in a temporally offset manner counter to a production direction (19) of the plastic profile (10) along a portion of said plastic profile (10).

10. The pultrusion device as claimed in claim 9, **characterized in that** the at least two mould parts (14, 15, 29, 30, 32, 33) are movable in a periodically alternating manner, or in steps, respectively, in particular at least at times simultaneously and/or temporally separately, counter to a production direction (19) of the plastic profile (10) along a portion of said plastic profile (10).

11. The pultrusion device as claimed in claim 9 or 10, **characterized in that** the at least two mould parts (14, 15, 29, 30, 32, 33) are movable back and forth discontinuously or in steps, respectively, and herein are at least partially mutually opposite or protruding, respectively, along a longitudinal axis of the plastic profile (10).

12. The pultrusion device as claimed in one of claims 9 to 11, **characterized in that** at least one mould part (33) is configured as a hollow section, and at least one further mould part (32) is configured as a core that communicates with the hollow section, and that the at least one hollow section and the at least one core are movable in a temporally offset manner counter to a production direction (19) of the plastic profile (10) along a portion of said plastic profile (10), the at least one core preferably being movable in the at least one hollow section.

13. The pultrusion device as claimed in one of claims 9 to 12, **characterized in that** at least one holding means, preferably one gripper (21) having two gripper parts (22, 23) is configured for the production of a releasable gripper connection to the finished plastic profile (10) outside the mould (20, 34, 34), in particular ahead of the mould (20, 34, 34), and/or that the or each holding means is movable relative to the plastic profile (10).

14. The pultrusion device as claimed in one of claims 9 to 13, **characterized in that** the mould parts (14, 15, 29, 30, 32, 33) have opposite mould faces (16, 17), in particular compact mould faces (16, 17), which communicate with one another, one mould face (16, 17) preferably being configured so as to be concave and the opposite mould face (16, 17) being configured so as to be convex, or the mould faces (16, 17) being configured so as to be annular, in particular one mould part (29), preferably the convex mould part (19), being longer than the other mould part (30).

15. The pultrusion device as claimed in one of claims 9 to 14, **characterized in that** the sides of the mould parts (14, 15, 29, 30) that are moved first across the reinforcement, or the sides of the mould parts (14, 15, 29, 30) that face away from the production direction (19), respectively, on opposite mould faces (16, 17) have inlet ramps (26, 27) for receiving the reinforcement (11).

16. The pultrusion device as claimed in one of claims 9 to 15, **characterized in that** a separation unit, in particular a saw (27) for sawing the moulded plastic profile (10), is disposed ahead of the holding means in the production direction (19).

## Revendications

1. Procédé de fabrication d'un profilé en plastique (10) de préférence courbe, présentant un renforcement continu (11) constitué de fils (13), de tissus et/ou similaires, par un procédé de pultrusion, un moule (20, 34, 34) étant déplacé dans le sens opposé à une direction de fabrication (19) du profilé en plastique (10) le long d'une portion du même profilé en plastique (10) et le profilé en plastique (10) étant fixé par au moins un moyen de retenue positionné avant le moule (20, 34, 34), vu dans la direction de fabrication (19), **caractérisé en ce que** le moule (20, 34, 34) est formé d'au moins deux parties de moule séparées (14, 15, 29, 30, 32, 33) par rapport à la section transversale du profilé en plastique (10), qui sont déplacées de manière décalée dans le temps dans le sens opposé à une direction de fabrication (19) du profilé en plastique (10) le long d'une portion du même profilé en plastique (10).

2. Procédé selon la revendication 1, **caractérisé en ce que** les au moins deux parties de moule (14, 15, 29, 30, 32, 33) sont déplacées périodiquement en alternance, en particulier au moins temporairement simultanément ou séparément dans le sens opposé à une direction de fabrication (19) du profilé en plastique (10) le long d'une portion du même profilé en plastique (10).

3. Procédé selon la revendication 1 ou 2, **caractérisé en ce que** les au moins deux parties de moule (14, 15, 29, 30, 32, 33) sont déplacées de manière discontinue ou pas à pas, de préférence parallèlement les unes aux autres au moins en partie de manière opposée ou en déport le long d'un axe longitudinal du profilé en plastique (10), notamment un mouvement relatif des parties de moule (14, 15, 29, 30, 32, 33) par rapport au profilé en plastique (10) ayant lieu seulement pendant un déplacement vers l'arrière des parties de moule (14, 15, 29, 30, 32, 33) dans le sens opposé à la direction de fabrication (19).

4. Procédé selon l'une quelconque des revendications précédentes, **caractérisé en ce que** le profilé en plastique (10) est fixé pendant le déplacement des au moins deux parties de moule (14, 15, 29, 30, 32, 33) sur le profilé en plastique (10) fixe par rapport à celles-ci, de préférence est fixé par au moins un moyen de retenue, en particulier un dispositif de préhension (21).

5. Procédé selon l'une quelconque des revendications précédentes, **caractérisé en ce que** tout d'abord une première partie de moule (14, 30, 32), de préférence une partie de moule convexe (14, 30, 32) est déplacée dans le sens opposé à la direction de fabrication (19) le long du profilé en plastique fixe (10), et ensuite une deuxième partie de moule, notamment plus courte (15, 29, 33), de préférence une partie de moule concave (15, 29, 33), est déplacée dans la même mesure que la première partie de moule (14, 30, 32), et pour chaque déplacement d'une partie de moule (14, 15, 29, 30, 32, 33) dans le sens opposé à la direction de fabrication (19), au moins une partie d'une portion nouvellement fabriquée du profilé en plastique (10) étant démoulée ou libérée de la partie de moule en mouvement (14, 15, 29, 30, 32, 33) .

6. Procédé selon l'une quelconque des revendications précédentes, **caractérisé en ce que** l'au moins un moyen de retenue, dans les phases dans lesquelles les parties de moule (14, 15, 29, 30, 32, 33) sont immobiles, est amené hors contact avec le profilé en plastique (10) et les au moins deux parties de moule (14, 15, 29, 30, 32, 33) se déplacent conjointement avec le profilé en plastique (10) dans la direction de fabrication (19) vers l'au moins un moyen de retenue immobile et l'au moins un moyen de retenue est ensuite amené à nouveau en contact avec le profilé en plastique (10) pour atteindre une position de départ.

7. Procédé selon l'une quelconque des revendications précédentes, **caractérisé en ce que** l'au moins un moyen de retenue, dans les phases dans lesquelles les parties de moule (14, 15, 29, 30, 32, 33) sont immobiles, est amené hors contact avec le profilé en plastique (10) et est déplacé relativement au profilé en plastique immobile (10) dans la direction des parties de moule également immobiles (14, 15, 29, 30, 32, 33), de préférence est ramené en arrière dans le sens opposé à la direction de fabrication (19), est à nouveau amené en contact avec le profilé en plastique (10) puis, pour atteindre une position de départ, les parties de moule (14, 15, 29, 30, 32, 33) conjointement avec le profilé en plastique (10) et le moyen de retenue, sont déplacées dans la direction de fabrication.

8. Procédé selon l'une quelconque des revendications précédentes, **caractérisé en ce que** lors du déplacement des parties de moule (14, 15, 29, 30, 32, 33), le renforcement entre les parties de moule (14, 15, 29, 30, 32, 33) et un dépôt de matière est précontraint, de préférence est précontraint par le biais de la partie de moule convexe (14, 15, 29, 30, 32, 33), en particulier le renforcement (11) est précontraint à la forme du profilé en plastique à fabriquer (10).

9. Dispositif de pultrusion pour fabriquer un profilé en plastique (10) de préférence courbe, présentant un renforcement continu (11) constitué de fils (13), de tissus et/ou similaires, avec un moule (20, 34, 34) qui peut être déplacé dans le sens opposé à une direction de fabrication (19) du profilé en plastique (10) le long d'une portion du profilé en plastique (10) et au moins un moyen de retenue positionné, vu dans la direction de fabrication (19), avant le moule (20, 34, 34) pour fixer au moins principalement le profilé en plastique, **caractérisé en ce que** le moule (20, 34, 34) est formé au moins à partir de deux parties de moule (14, 15, 29, 30, 32, 33) séparées par rapport à la section transversale du profilé en plastique (10), lesquelles peuvent être déplacées de manière décalée dans le temps dans le sens opposé à une direction de fabrication (19) du profilé en plastique (10) le long d'une portion du même profilé en plastique (10).

10. Dispositif de pultrusion selon la revendication 9, **caractérisé en ce que** les au moins deux parties de moule (14, 15, 29, 30, 32, 33) peuvent être déplacées périodiquement en alternance ou pas à pas, en particulier au moins temporairement simultanément et/ou de manière séparée dans le temps dans le sens opposé à une direction de fabrication (19) du profilé en plastique (10) le long d'une portion du même profilé en plastique (10) .

11. Dispositif de pultrusion selon la revendication 9 ou 10, **caractérisé en ce que** les au moins deux parties de moule (14, 15, 29, 30, 32, 33) peuvent être déplacées en va et vient de manière discontinue ou pas à pas et en l'occurrence sont opposées ou en déport au moins en partie le long d'un axe longitudinal du profilé en plastique (10) .

12. Dispositif de pultrusion selon l'une quelconque des revendications 9 à 11, **caractérisé en ce qu'**au moins une partie de moule (33) est réalisée sous forme de profilé creux et au moins une partie de moule supplémentaire (32) est réalisée sous forme de noyau qui correspond au profilé creux, et l'au moins un profilé creux et l'au moins un noyau peuvent être déplacés de manière décalée dans le temps dans le sens opposé à une direction de fabrication (19) du profilé en plastique (10) le long d'une portion du même profilé en plastique (10), de préférence l'au moins un noyau pouvant être déplacé dans l'au moins un profilé creux.

13. Dispositif de pultrusion selon l'une quelconque des revendications 9 à 12, **caractérisé en ce qu'**au moins un moyen de retenue, de préférence un dispositif de préhension (21) présentant deux parties de préhension (22, 23), est réalisé pour la fabrication d'une liaison de préhension amovible avec le profilé en plastique fini (10) à l'extérieur du moule (20, 34, 34), en particulier avant le moule (20, 34, 34) et/ou le ou chaque moyen de retenue peut être déplacé par rapport au profilé en plastique (10).

14. Dispositif de pultrusion selon l'une quelconque des revendications 9 à 13, **caractérisé en ce que** les parties de moule (14, 15, 29, 30, 32, 33) présentent des surfaces de moule opposées (16, 17), en particulier des surfaces de moule fermées (16, 17) qui se correspondent mutuellement, de préférence une surface de moule (16, 17) étant réalisée sous forme concave et la surface de moule opposée (16, 17) étant réalisée sous forme convexe, ou les surfaces de moule (16, 17) étant réalisées sous forme annulaire, en particulier une partie de moule (29), de préférence la partie de moule convexe (19), étant plus longue que l'autre partie de moule (30).

15. Dispositif de pultrusion selon l'une quelconque des revendications 9 à 14, **caractérisé en ce que** les côtés des parties de moule (14, 15, 29, 30) qui sont déplacés en premier sur le renforcement, ou les côtés des parties de moule (14, 15, 29, 30) opposés à la direction de fabrication (19), présentent, sur des surfaces de moule opposées (16, 17), des biseaux d'entrée (26, 27) pour recevoir le renforcement (11).

16. Dispositif de pultrusion selon l'une quelconque des revendications 9 à 15, **caractérisé en ce que** dans la direction de fabrication (19) avant le moyen de retenue, une unité de séparation, en particulier une scie (27) est prévue pour scier le profilé en plastique moulé (10).
